# EUROPÄISCHE PATENTSCHRIFT

(11) **EP 2 226 947 B1**
(45) Veröffentlichungstag und Bekanntmachung des Hinweises auf die Patenterteilung: **01.05.2019**
(21) Anmeldenummer: 10154185.2
(22) Anmeldetag: 22.02.2010
(51) Int. Cl.: H04B 1/10, H04B 1/16, H04H 40/72

(54) **Selektionsfilteranordnung für einen elektronischen Empfänger und Verfahren zur Selektionsfilterung**
Selection filter assembly for an electronic receiver and selection filtering method
Agencement de filtres de sélection pour un récepteur électronique et procédé de filtrage de sélection

(30) Priorität: 05.03.2009 DE 102009001345
(43) Veröffentlichungstag der Anmeldung: 08.09.2010
(73) Patentinhaber: Robert Bosch GmbH, 70442 Stuttgart (DE)
(72) Erfinder: Risse, Marcus, 31139, Hildesheim (DE)

(56) Entgegenhaltungen:
- EP-A1- 0 567 265
- EP-A2- 1 959 575
- WO-A1-00/77939
- WO-A1-2007/000882
- JP-A- 2004 260 528
- JP-A- 2007 184 693

## Beschreibung

Die Erfindung betrifft eine Selektionsfilteranordnung für einen elektronischen Empfänger gemäß dem Oberbegriff des Anspruchs 1. Die Erfindung betrifft ferner ein Verfahren zur Selektionsfilterung eines Empfangsignals eines elektronischen Empfängers gemäß dem Oberbegriff des Anspruchs 9.

### Stand der Technik

Handelsübliche elektronische Empfänger, z. B. Autoradioempfänger, verfügen über einen Selektionsfilter, welches das gewünschte Empfangssignal auf einem eingestellten Empfangskanal von benachbarten Kanälen trennt. In mobilen Empfängern wird häufig die Bandbreite des Selektionsfilters dynamisch an die Empfangsgegebenheiten angepasst, wie z. B. aus der DE 102 49 353 A1 bekannt.

Bei solchen Empfängern wird die Bandbreite des Selektionsfilters verringert, wenn beispielsweise von einem Nachbarkanaldetektor das Auftreten von Störungen des Empfangssignals von angrenzenden Frequenzbereichen, d. h. Nachbarkanälen, detektiert wird. Infolge der Verringerung der Bandbreite werden die Störungen im Wesentlichen ausgeblendet, was die Empfangsqualität des elektronischen Empfängers verbessert.

Bei handelsüblichen Empfängern kommt es vor, dass Empfangssignale mit einem extrem hohen Modulationshub durch eine Beschneidung des Frequenzspektrums Verzerrungen zur Folge haben, die wiederum zu Störgrößen führen, die den Störungen des Empfangssignals von angrenzenden Frequenzbereichen ähnlich sind. Werden solche Störgrößen vom Nachbarkanaldetektor dann als Nachbarkanal-Störungen erkannt, kann dies zu einer in diesem Fall unerwünschten Verringerung der Bandbreite des Selektionsfilters führen. Die Verringerung der Bandbreite des Selektionsfilters kann hörbare Verzerrungen zur Folge haben, was die Empfangsqualität des elektronischen Empfängers wiederum beeinträchtigen kann.

Weitere Beispiele für elektronische Empfänger sind offenbart in: EP 0 567 265 A1, EP 1 959 575 A2, WO 00/77939 A1, WO 2007/000882 A1, JP 2007 184693 A, JP 2004 260528 A.

### Aufgabenstellung

Der Erfindung liegt daher die Aufgabe zu Grunde, die Empfangsqualität von elektronischen Empfängern weiter zu verbessern.

Diese Aufgabe wird durch die in dem Patentanspruch 1 angegebene Selektionsfilteranordnung gelöst. Die Aufgabe wird ferner durch das im Anspruch 10 angegebene Verfahren zur Selektionsfilterung gelöst. Die Unteransprüche geben vorteilhafte Ausgestaltungen der Erfindung an.

Die Erfindung hat den Vorteil, mittels der Detektionseinrichtung, die den Gleichanteil des Multiplexsignals auf dem eingestellten Empfangskanal auswertet, eine Unterscheidung von Störgrössen auf Grund einer "echten" Nachbarkanalstörung und Störgrössen in Folge von extrem hohem Modulationshub zu ermöglichen. Die Erfindung ermöglicht eine Verbesserung der Empfangsqualität eines elektronischen Empfängers in der Art, dass bei Auftreten eines extrem hohen Modulationshubs auf dem eingestellten Empfangskanal das Selektionsfilter nicht unerwünscht auf eine verringerte Bandbreite eingestellt wird. Hierdurch können unerwünschte Verzerrungen des vom Empfänger ausgegebenen Tonsignals vermieden werden. Vorteilhaft ist dennoch eine Ausblendung von "echten" Nachbarkanalstörungen möglich, d. h. durch auf angrenzenden Frequenzbereichen des gewünschten Empfangskanals auftretende Signale hervorgerufene Störgrössen, so dass hierdurch bedingte Störungen des von dem Empfänger ausgegebenen Tonsignals weiterhin effektiv unterdrückt werden können.

Gemäss einer vorteilhaften Weiterbildung der Erfindung wertet die Detektionseinrichtung ein Multiplexsignal aus, das von einem dem Selektionsfilter nachgeschalteten Demodulator erzeugt wird. Vorteilhaft wird somit das in elektronischen Empfängern, insbesondere in FM- (Frequenzmodulations-) Empfängern, vorhandene Multiplexsignal zusätzlich verwertet, um eine Unterscheidungsgröße für die Art der Störungen zu generieren und entsprechend die Ansprechempfindlichkeit des Nachbarkanaldetektors anzupassen. Die Erfindung kann daher mit vernünftigem Aufwand in handelsüblichen FM-Empfängern realisiert werden, da kein zusätzliches Signal erzeugt werden muss, sondern das vorhandene Multiplex-Signal verwertet wird.

Gemäß einer vorteilhaften Weiterbildung der Erfindung weist die Detektionseinrichtung eine Hüllsignal-Einrichtung auf, die aus dem Multiplex-Signal oder einem daraus erzeugten Signal ein Hüllsignal bildet. Es wurde erkannt, dass durch solche Hüllsignale, z. B. ein oberes einhüllendes Signal und ein unteres einhüllendes Signal, ein Unterscheidungskriterium für Störgrößen von angrenzenden Frequenzbereichen oder auf Grund von hohem Modulationshub gebildet werden kann. Vorteilhaft kann auf diese Weise mit geringem Aufwand die Ansprechempfindlichkeit des Nachbarkanaldetektors in der gewünschten Weise angepasst werden.

Gemäß einer vorteilhaften Weiterbildung der Erfindung ist der Hüllsignal-Einrichtung eine Differenz-Einrichtung nachgeordnet, die aus von der Hüllsignal-Einrichtung erzeugten Hüllsignalen ein Differenzsignal erzeugt. Das Differenzsignal wird gemäß einer weiteren vorteilhaften Weiterbildung dem Nachbarkanaldetektor zur Anpassung von dessen Ansprechempfindlichkeit zugeführt. Vorteilhaft wird die Ansprechempfindlichkeit des Nachbarkanaldetektors desto empfindlicher eingestellt, je größer das hiermit erzeugte Differenzsignal ist. Das erzeugte Differenzsignal kann somit auf einfache Weise direkt zur Anpassung der Ansprechempfindlichkeit verwendet werden.

Gemäß einer vorteilhaften Weiterbildung der Erfindung erfolgt eine Vorverarbeitung des Multiplexsignals derart, dass zur Bildung eines Gleichanteils des Multiplexsignals eine Gleichanteil-Einrichtung vorgesehen ist. Die Gleichanteil-Einrichtung erzeugt ein Gleichanteil-Signal, dass nach Art eines gleitenden Mittelwerts den Gleichanteil des Multiplexsignals wiedergibt und zur Weiterverarbeitung durch die Hüllsignal-Einrichtung vorteilhaft geeignet ist. Die Gleichanteil-Einrichtung kann vorteilhaft als Tiefpassfilter ausgebildet sein bzw. einen Tiefpassfilter aufweisen. Es ist ebenfalls vorteilhaft, das von dem Demodulator stammende Multiplexsignal zunächst in einer Abtastrate zu reduzieren und dann der Tiefpassfilterung zuzuführen.

Wie erkennbar ist, kann durch die zuvor erläuterten Maßnahmen ein zeitvaribales Gleichanteil-Signal aus dem Multiplexsignal gewonnen werden, d. h. ein Signal, das die zeitlichen Änderungen des Gleichanteils des Multiplexsignals repräsentiert und diesen bei Veränderungen zeitlich folgen kann.

Die Erfindung wird nachfolgend anhand eines Ausführungsbeispiels unter Verwendung einer Zeichnung näher erläutert.

Es zeigt:

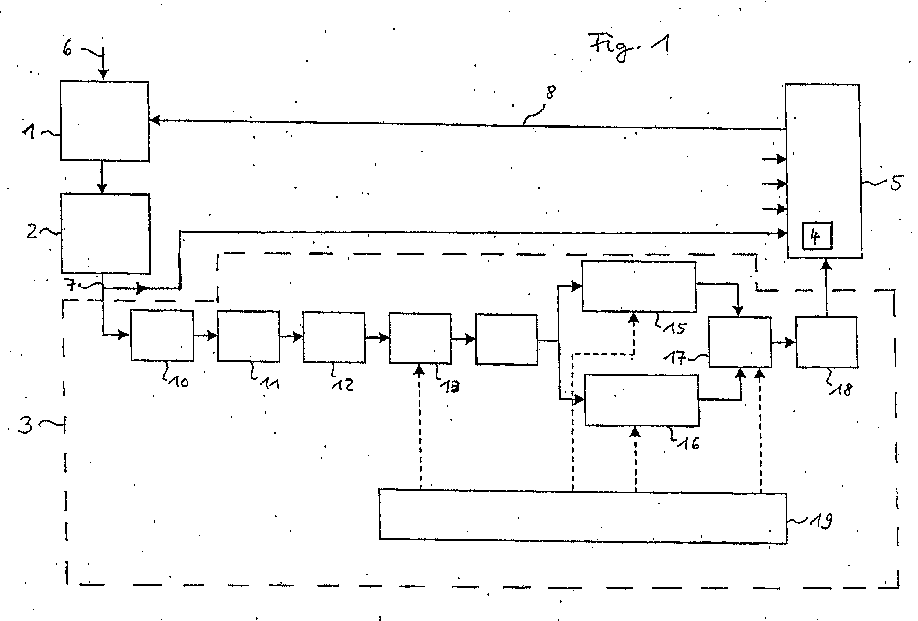

Figur 1 ein Blockschaltbild einer erfindungsgemäßen Selektionsfilteranordnung.

Die Erfindung kann vorteilhaft in Form von analoger und/oder digitaler Schaltungstechnik ausgeführt werden. Die Erläuterung der Erfindung anhand des in der Figur 1 dargestellten Ausführungsbeispiels erfolgt auf der Grundlage von schaltungstechnischen Realisierungsmöglichkeiten der Erfindung. Die Erfindung kann vorteilhaft auch in Form eines Verfahrens, wie in den Ansprüchen 10 und 11 wiedergegeben, realisiert werden. Die praktische Realisierung der Erfindung erfolgt dann vorteilhaft durch einen Mikroprozessor oder einen Signalprozessor, auf dem das erfindungsgemäße Verfahren in Form eines Programms vorgesehen ist, das von dem Mikroprozessor bzw. dem Signalprozessor ausgeführt wird.

Die Figur 1 zeigt schematisch einen Selektionsfilter 1, das beispielsweise als FM-Selektionsfilter ausgebildet ist. Das Selektionsfilter 1 empfängt an einem Eingang ein frequenzmoduliertes Empfangssignal 6 auf einem eingestellten Empfangskanal. Das Empfangssignal 6 kann beispielsweise ein Zwischenfrequenz-Empfangssignal oder ein Basisband heruntergemischtes

Zwischenfrequenzsignal sein, das von einer vorgelagerten Empfangsstufe des Empfängers erzeugt wird. Das Selektionsfilter 1 ist bezüglich seiner Bandbreite einstellbar. Das Selektionsfilter 1 begrenzt das Empfangssignal 6 auf die jeweils eingestellte Bandbreite und gibt ein gefiltertes Ausgangssignal ab. An den Ausgang des Selektionsfilters 1 ist ein Demodulator 2 geschaltet, der das gefilterte Ausgangssignal des Selektionsfilters 1 demoduliert und beispielsweise an einen Stereo-Decoder (nicht dargestellt) in Form eines Multiplexsignals 7 abgibt.

Das Multiplexsignal 7 wird zudem einer Selektionsfilter-Steuereinheit 5 zugeführt, die über ein Steuersignal 8 die Bandbreite des Selektionsfilters 1 steuert. Die Selektionsfilter-Steuereinheit 5 kann zum Empfang und zur Auswertung weiterer Signale vorgesehen sein. Die Selektionsfilter-Steuereinheit 5 weist einen Nachbarkanaldetektor 4 auf, dem das Multiplexsignal 7 zugeführt wird. Der Nachbarkanaldetektor 4 ist dazu eingerichtet, Störungen auf einem Nachbarkanal zu detektieren, d. h. auf Frequenzbereichen, die an den eingestellten Empfangskanal angrenzen. Wenn der Nachbarkanaldetektor 4 eine Störung durch einen Nachbarkanal detektiert, wird die Frequenzbandbreite des Selektionsfilters 1 schmaler gestellt. Sofern der Nachbarkanaldetektor 4 trotz einer solchen Reduzierung der Bandbreite weiterhin Störungen detektiert, wird die Frequenzbandbreite des Selektionsfilters 1 beispielsweise in vorgegebenen Stufen weiter verringert.

Das Multiplexsignal 7 wird zudem einer Detektionseinrichtung 3 zugeführt. Die Detektionseinrichtung 3 ist eingerichtet, die Ansprechempfindlichkeit des Nachbarkanaldetektors 4 empfindlicher zu stellen, wenn die zeitliche Varianz des Gleichanteils des Multiplexsignals 7 auf dem eingestellten Empfangskanal hoch ist. Entsprechend wird die Ansprechempfindlichkeit des Nachbarkanaldetektors 4 unempfindlicher gestellt, wenn die zeitliche Varianz des Gleichanteils des Multiplexsignals 7 auf dem eingestellten Empfangskanal gering ist.

Die Detektionseinrichtung 3 weist einen ersten Abtastraten-Reduzierer 10, einen nachgeschalteten Tiefpassfilter 11, einen diesem nachgeschalteten zweiten Abtastraten-Reduzierer 12 sowie einen diesem nachgeschalteten zweiten Tiefpassfilter 13 auf. Je nach Auslegung der Detektionseinrichtung ist auch eine Ausbildung mit nur einem Tiefpassfilter und/oder einem Abtastraten-Reduzierer vorteilhaft möglich. Der erste und der zweite Abtastraten-Reduzierer 10, 12 setzen die verwendete Abtastrate des Signals herunter. Hierdurch kann der Signalverarbeitungsaufwand reduziert werden bzw. die Signalverarbeitung beschleunigt werden. Die Abtastrate wird dabei z.B. von einigen Hundert Kilohertz auf einen Wert in der Größenordnung von einigen Hundert Hertz reduziert. Das erste und zweite Tiefpassfilter 11, 13 bewirken eine Tiefpassfilterung und damit eine Glättung des Signals. Vorteilhaft bewirkt das zweite Tiefpassfilter 13 gewonnene Ausgangssignal eine starke Filterung, derart, dass das in dem Tiefpassfilter 13 gewonnene Ausgangssignal zumindest im ungestörten Empfangsfall den Gleichanteil des Multiplexsignals 7 wiedergibt. Das erste Tiefpassfilter 10 weist beispielsweise eine Filterkonstante im Bereich von etwa 15 ms auf, das zweite Tiefpassfilter 13 beispielsweise eine Filterkonstante im Bereich von etwa 150 ms.

Das auf diese Art gewonnene Gleichanteil-Signal wird sodann einer Hüllsignal-Einrichtung zugeführt, die eine obere Spitzenwertgleicheinrichtereinheit 15 und eine untere Spitzenwertgleicheinrichtereinheit 16 aufweist. Mittels der oberen Spitzenwertgleicheinrichtereinheit 15 wird die obere Einhüllende des Gleichanteil-Signals erzeugt. Analog wird durch die untere Spitzenwertgleicheinrichtereinheit 16 die untere Einhüllende des Gleichanteilsignals erzeugt. Die Ausgangssignale der Hüllsignal-Einrichtung 15, 16, nämlich das obere und das untere einhüllende Signal, werden dann einer Differenz-Einrichtung 17 zugeführt, die aus den Hüllsignalen ein Differenz-Signal erzeugt. Das Differenzsignal wird vorteilhaft als Differenz aus der oberen und der unteren Einhüllenden des Gleichanteil-Signals gebildet. Das hierbei entstehende Differenz-Signal stellt ein Maß für die Empfangsstörung durch einen Nachbarkanal dar. Es wurde herausgefunden, dass im ungestörten Empfangsfall das Gleichanteil-Signal nahezu konstant ist, so dass die Differenz aus der oberen und der unteren Einhüllenden bei Null liegt. Sofern das empfangene Signal durch einen beispielsweise 100 kHz benachbarten Kanal gestört wird, weist das Gleichanteil-Signal eine gewisse Schwankung auf, deren Dynamik durch die Differenz der Ausgangssignale der beiden Spitzenwertgleichrichtereinheiten 15, 16 wiedergegeben wird.

Der Differenz-Einrichtung 17 ist eine Kennlinien-Anpassungseinrichtung 18 nachgeordnet. Durch die Kennlinien-Anpassungseinrichtung 18 kann das Differenz-Signal in der erforderlichen Weise hinsichtlich seiner Kennlinie angepasst werden. Vorteilhaft kann durch die Kennlinien-Anpassungseinrichtung 18 beispielsweise eine Linearisierung der Kennlinie des Differenz-Signals durchgeführt werden.

Das Ausgangssignal der Kennlinien-Anpassungseinrichtung 18 wird der Selektionsfilter-Steuereinheit 5 zugeführt. In der Selektionsfilter-Steuereinheit 5 bewirkt das von der Kennlinien-Anpassungseinrichtung 18 zugeführte Signal eine Anpassung der Ansprechempfindlichkeit des Nachbarkanaldetektors 4 derart, dass die Störungsschwellen desto niedriger eingestellt werden, je größer das über die Kennlinien-Anpassungseinrichtung 18 angepasste Gleichanteil-Signal ist. Bei einem großen Ausgangssignal der Kennlinien-Anpassungseinrichtung 18 und entsprechend niedrig eingestellten Störungsschwellen kann vorteilhaft relativ empfindlich auf Störungen durch den Nachbarkanal reagiert werden, d. h. die Ansprechempfindlichkeit des Nachbarkanaldetektors 4 ist dann größer. Sofern die Werte des Ausgangsignals der Kennlinien-Anpassungseinrichtung 18 klein sind, werden die Schwellwerte für die Störungserkennung durch die Selektionsfilter-Steuereinheit 5 vergrößert, d. h. die Ansprechempfindlichkeit des Nachbarkanaldetektors 4 wird verringert, um Fehlreaktionen auf Grund eines relativ großen Modulationshubs zu vermeiden.

Die Detektionseinrichtung 3 weist ferner eine Rücksetz-Einrichtung 19 auf, die zur Rücksetzung des zweiten Tiefpassfilters 13, der oberen Spitzenwertgleichrichtereinheit 15, der unteren Spitzenwertgleichrichtereinheit 16 sowie der Differenz-Einrichtung 17 eingerichtet ist. Die Rücksetz-Einrichtung 19 erkennt einen Kanalwechsel des Empfängers, d. h. einen Wechsel des gewünschten, eingestellten Empfangskanals auf einen anderen Kanal. Bei einem solchen Wechsel des Empfangskanals setzt die Rücksetz-Einrichtung 19 die zuvor erwähnten Einrichtungen 13, 15, 16, 17 auf Neutralwerte zurück. Dies hat den Vorteil, dass die Detektionseinrichtung 3 sich bei einer Änderung des eingestellten Empfangskanals schnell auf den neuen Kanal einstellen kann und nicht zeitweise mit empfangenen Werten des früheren Empfangskanals weiterarbeitet. Eine solche Rücksetzung der Signale ist insbesondere bei denjenigen Elementen der Detektionseinrichtung 3 vorteilhaft, die auf Grund ihrer Funktion eine gewisse Speicherung von früheren Signalbedingungen beinhalten, wie etwa dem langsamen Tiefpassfilter 13 und den Spitzenwertgleichrichtereinheiten 15, 16. Durch die Rücksetzung werden die alten, gespeicherten Werte gelöscht. Zudem ist eine Rücksetzung der Differenz-Einrichtung 17 vorteilhaft, um das erzeugte Gleichanteil-Signal beim Wechsel des Empfangskanals für eine bestimmte Zeit auf einem definierten Wert zu halten und hiermit Übergangseffekte auszublenden.

Ein vorteilhaftes Ausführungsbeispiel eines erfindungsgemäßen Verfahrens sieht vor, dass ein Empfangssignal eines elektronischen Empfängers auf einem eingestellten Empfangskanal empfangen wird. Das Empfangssignal wird mit einem in seiner Bandbreite einstellbaren Selektionsfilter gefiltert und dann demoduliert. Sowohl die Filterung mit dem Selektionsfilter als auch die Demodulation können auf einem Mikroprozessor oder einem Signalprozessor in Form von Programmschritten ausgeführt werden. Ein durch die Demodulation erzeugtes Multiplexsignal 7 wird einem Programmmodul zur Steuerung der Bandbreite des Selektionsfilters 1 zugeführt. Das Programmmodul weist eine Erkennung von Störungen des Empfangssignals von angrenzenden Frequenzbereichen auf.

In einem zusätzlichen Verarbeitungszweig des Verfahrens wird das Multiplexsignal 7 in seiner Abtastrate reduziert. Aus dem erzeugten Signal wird ein Gleichanteil-Signal gebildet, beispielsweise durch Tiefpassfilterung oder gleitende Mittelwertbildung. Aus dem Gleichanteil-Signal wird sodann ein oberes und ein unteres Hüllsignal gebildet. Die Hüllsignale stellen dabei die oberen und unteren Einhüllenden des Gleichanteil-Signals dar. Sodann wird die Differenz aus dem oberen und dem unteren Hüllsignal gebildet. Das hierbei entstehende Differenz-Signal wird bei Bedarf hinsichtlich seiner Kennlinie angepasst. Schließlich wird die Ansprechempfindlichkeit für die Detektion von Störungen des Empfangssignals von angrenzenden Frequenzbereichen abhängig von dem erzeugten Signal angepasst, derart, dass die Störungsschwellen desto niedriger eingestellt werden, je größer das angepasste Gleichanteil-Signal ist. Entsprechend werden bei einer Verkleinerung des Gleichanteil-Signals die Störungsschwellen vergrößert.

## Patentansprüche

1. Selektionsfilteranordnung für einen elektronischen Empfänger mit wenigstens einem Selektionsfilter (1) zur Filterung eines auf einem eingestellten Empfangskanal empfangenen frequenzmodulierten Empfangssignals (6), wobei eine Bandbreite des Selektionsfilters (1) einstellbar ist, und mit wenigstens einem Nachbarkanaldetektor (4) zur Detektion von Störungen des Empfangssignals (6) von angrenzenden Frequenzbereichen, wobei der Nachbarkanaldetektor (4) zur Verringerung der Bandbreite des Selektionsfilters (1) bei Auftreten von Störungen des Empfangssignals (6) von angrenzenden Frequenzbereichen eingerichtet ist, **dadurch gekennzeichnet, dass** eine Detektionseinrichtung (3) vorgesehen ist, die eingerichtet ist, die Ansprechempfindlichkeit des Nachbarkanaldetektors (4) mit abnehmendem Modulationshub des Empfangssignals (6) zu erhöhen bzw. mit zunehmendem Modulationshub zu verringern.

2. Selektionsfilteranordnung nach Anspruch 1, **dadurch gekennzeichnet, dass** dem Selektionsfilter (1) ein Demodulator (2) nachgeschaltet ist, der zur Erzeugung eines Multiplexsignals (7) eingerichtet ist, und die Detektionseinrichtung (3) zur Auswertung des Multiplexsignals (7) eingerichtet ist.

3. Selektionsfilteranordnung nach wenigstens einem der vorhergehenden Ansprüche, **dadurch gekennzeichnet, dass** die Detektionseinrichtung (3) eine Hüllsignal-Einrichtung (15, 16) aufweist, die zur Bildung eines Hüllsignals aus dem Multiplexsignal (7) oder einem daraus erzeugten Signal eingerichtet ist.

4. Selektionsfilteranordnung nach Anspruch 3, **dadurch gekennzeichnet, dass** der Hüllsignal-Einrichtung (15, 16) eine Differenz-Einrichtung (17) nachgeordnet ist, die zur Erzeugung eines Differenz-Signals aus von der Hüllsignal-Einrichtung (15, 16) erzeugten Hüllsignalen eingerichtet ist.

5. Selektionsfilteranordnung nach Anspruch 4, **dadurch gekennzeichnet, dass** das Differenz-Signal dem Nachbarkanaldetektor (4) zur Anpassung von dessen der Ansprechempfindlichkeit zugeführt ist.

6. Selektionsfilteranordnung nach wenigstens einem der Ansprüche 3 bis 5, **dadurch gekennzeichnet, dass** eine Rücksetz-Einrichtung (19) vorgesehen ist, die für eine Rücksetzung wenigstens der Hüllsignal-Einrichtung (15, 16) bei einem Wechsel des eingestellten Empfangskanals eingerichtet ist.

7. Selektionsfilteranordnung nach wenigstens einem der Ansprüche 2 bis 6, **dadurch gekennzeichnet, dass** eine Gleichanteil-Einrichtung (10, 11, 12, 13) zur Bildung des Gleichanteils des Multiplexsignals (7) vorgesehen ist, die zur Erzeugung eines Gleichanteil-Signals eingerichtet ist.

8. Selektionsfilteranordnung nach Anspruch 7, **dadurch gekennzeichnet, dass** das Gleichanteil-Signal der Hüllsignal-Einrichtung (15, 16) zugeführt ist.

9. Selektionsfilteranordnung nach einem der vorhergehenden Ansprüche, **dadurch gekennzeichnet, dass** der elektronische Empfänger ein Autoradioempfänger ist.

10. Verfahren zur Selektionsfilterung eines Empfangsignals eines elektronischen Empfängers, wobei ein Empfangssignal (6) auf einem eingestellten Empfangskanal empfangen wird, mit einem in seiner Bandbreite einstellbaren Selektionsfilter (1) gefiltert wird, wobei die Bandbreite des Selektionsfilters (1) bei Auftreten von Störungen des Empfangssignals (6) von angrenzenden Frequenzbereichen verringert wird, **dadurch gekennzeichnet, dass** die Empfindlichkeit für eine Detektion von Störungen des Empfangssignals (6) von angrenzenden Frequenzbereichen mit abnehmendem Modulationshub des Empfangssignals erhöht bzw. mit zunehmendem Modulationshub verringert wird.

11. Verfahren nach Anspruch 10, **dadurch gekennzeichnet, dass** der elektronische Empfänger ein Autoradioempfänger ist.

## Claims

1. Selection filter arrangement for an electronic receiver having at least one selection filter (1) for filtering a frequency-modulated received signal (6) received on a selected reception channel, wherein a bandwidth of the selection filter (1) is selectable, and having at least one adjacent channel detector (4) for detecting interference in the received signal (6) from adjoining frequency bands, wherein the adjacent channel detector (4) is configured to reduce the bandwidth of the selection filter (1) when interference occurs in the received signal (6) from adjoining frequency bands, **characterized in that** there is provision for a detection device (3) configured to increase the response sensitivity of the adjacent channel detector (4) as the modulation swing of the received signal (6) decreases and to reduce said response sensitivity as the modulation swing increases.

2. Selection filter arrangement according to Claim 1, **characterized in that** the selection filter (1) has a demodulator (2) connected downstream of it that is configured to generate a multiplex signal (7), and the detection device (3) is configured to evaluate the multiplex signal (7).

3. Selection filter arrangement according to at least either of the preceding claims, **characterized in that** the detection device (3) has an envelope signal device (15, 16) configured to form an envelope signal from the multiplex signal (7) or a signal generated therefrom.

4. Selection filter arrangement according to Claim 3, **characterized in that** the envelope signal device (15, 16) has a difference device (17) arranged downstream of it that is configured to generate a difference signal from envelope signals generated by the envelope signal device (15, 16).

5. Selection filter arrangement according to Claim 4, **characterized in that** the difference signal is supplied to the adjacent channel detector (4) to adjust its response sensitivity.

6. Selection filter arrangement according to at least one of Claims 3 to 5, **characterized in that** there is provision for a reset device (19) configured for resetting at least the envelope signal device (15, 16) when the selected reception channel changes.

7. Selection filter arrangement according to at least one of Claims 2 to 6, **characterized in that** there is provision for a DC-component device (10, 11, 12, 13) for forming the DC component of the multiplex signal (7), which DC-component device is configured to generate a DC-component signal.

8. Selection filter arrangement according to Claim 7, **characterized in that** the DC-component signal is supplied to the envelope signal device (15, 16).

9. Selection filter arrangement according to one of the preceding claims, **characterized in that** the electronic receiver is a car radio receiver.

10. Method for selection-filtering a received signal of an electronic receiver, wherein a received signal (6) is received on a selected reception channel and is filtered using a selection filter (1) with a selectable bandwidth, wherein the bandwidth of the selection filter (1) is reduced when interference occurs in the received signal (6) from adjoining frequency bands, **characterized in that** the sensitivity for detecting interference in the received signal (6) from adjoining frequency bands is increased as the modulation swing of the received signal decreases and is reduced as the modulation swing increases.

11. Method according to Claim 10, **characterized in that** the electronic receiver is a car radio receiver.

## Revendications

1. Agencement de filtres de sélection pour un récepteur électronique comportant au moins un filtre de sélection (1) pour filtrer un signal de réception modulé en fréquence (6) reçu sur un canal de réception réglé, dans lequel une largeur de bande du filtre de sélection (1) est réglable, et comportant au moins un détecteur de canal adjacent (4) pour détecter un brouillage du signal de réception (6) par des plages de fréquences adjacentes, dans lequel le détecteur de canal adjacent (4) est conçu pour réduire la largeur de bande du filtre de sélection (1) en cas d'apparition de brouillages du signal de réception (6) par des plages de fréquences adjacentes, **caractérisé en ce qu'**il est prévu un dispositif de détection (3) qui est conçu pour augmenter la sensibilité de réponse du détecteur de canal adjacent (4) dans le cas d'une excursion de modulation décroissante du signal de réception (6) ou pour la diminuer dans le cas d'une excursion de modulation croissante.

2. Agencement de filtres de sélection selon la revendication 1, **caractérisé en ce qu'**en aval du filtre de sélection (1) est connecté un démodulateur (2) qui est configuré pour générer un signal de multiplexage (7), et **en ce que** le dispositif de détection (3) est configuré pour évaluer le signal de multiplexage (7).

3. Agencement de filtres de sélection selon au moins l'une des revendications précédentes, **caractérisé en ce que** le dispositif de détection (3) comporte un dispositif de signal d'enveloppe (15, 16) conçu pour déterminer un signal d'enveloppe à partir du signal de multiplexage (7) ou d'un signal généré à partir de celui-ci.

4. Agencement de filtres de sélection selon la revendication 3, **caractérisé en ce qu'**en aval du dispositif de signal d'enveloppe (15, 16) se trouve un dispositif de différence (17) conçu pour générer un signal de différence à partir des signaux d'enveloppe générés par le dispositif de signal d'enveloppe (15, 16).

5. Agencement de filtres de sélection conformément à la revendication 4, **caractérisé en ce que** le signal de différence est fourni au détecteur de canal adjacent (4) pour ajuster sa sensibilité de réponse.

6. Agencement de filtres de sélection selon au moins l'une des revendications 3 à 5, **caractérisé en ce qu'**il est prévu un dispositif de réinitialisation (19) qui est conçu pour réinitialiser au moins le dispositif de signal d'enveloppe (15, 16) lors d'une modification du canal de réception réglé.

7. Agencement de filtres de sélection selon au moins l'une des revendications 2 à 6, **caractérisé en ce qu'**il est prévu un dispositif de composante continue (10, 11, 12, 13) pour déterminer la composante continue du signal de multiplexage (7), qui est conçu pour générer un signal de composante continue.

8. Agencement de filtres de sélection selon la revendication 7, **caractérisé en ce que** le signal de composante continue est fourni au dispositif de signal d'enveloppe (15, 16).

9. Agencement de filtres de sélection selon l'une des revendications précédentes, **caractérisé en ce que** le récepteur électronique est un récepteur d'autoradio.

10. Procédé de filtrage de sélection d'un signal de réception d'un récepteur électronique, dans lequel un signal de réception (6) est reçu sur un canal de réception réglé et est filtré au moyen d'un filtre de sélection (1) dont la largeur de bande est réglable, dans lequel la largeur de bande du filtre de sélection (1) est réduite en cas d'apparition de brouillages du signal de réception (6) par des plages de fréquences adjacentes, **caractérisé en ce que** la sensibilité de détection de brouillages du signal de réception (6) par des plages de fréquences adjacentes est augmentée dans le cas d'une excursion de modulation décroissante du signal de réception est diminuée dans le cas d'une excursion de modulation croissante.

11. Procédé selon la revendication 10, **caractérisé en ce que** le récepteur électronique est un récepteur d'autoradio.
